# EUROPEAN PATENT SPECIFICATION

(11) **EP 0 618 581 B1**
(45) Date of publication and mention of the grant of the patent: **17.06.1998**
(21) Application number: 94200766.7
(22) Date of filing: 24.03.1994
(51) Int. Cl.: G11B 25/06, G11B 23/04, G11B 23/08

(54) **Cassette adapter for a playback deck of the front-loading or the side-loading type**
Kassettenadapter für ein Wiedergabelaufwerk mit Frontladung oder Querladung
Adapteur à cassette pour une platine de reproduction du type à chargement frontal ou à chargement latéral

(30) Priority: 31.03.1993 EP 93200915
(43) Date of publication of application: 05.10.1994
(73) Proprietor: Philips Electronics N.V., 5621 BA Eindhoven (NL)
(72) Inventor: De Bie, Boele, NL-5656 Eindhoven (NL); Van Der Kruk, Willem Leonardus, NL-5656 Eindhoven (NL); Woo, George Tai Hoi, NL-5656 Eindhoven (NL)
(74) Representative: van der Kruk, Willem Leonardus

(56) References cited:
- JP-U-54 023 701
- US-A- 3 700 826
- US-A- 4 287 388
- US-A- 4 734 897

## Description

### Field of the invention

The invention relates to an adapter for enabling signals produced by a signal source to be reproduced as audio sounds by a cassette player audio system comprising a cassette audio playback deck of the front-loading type or the side -loading type, wherein a cassette is normally positioned in use substantially completely within the confines of said cassette playback deck, said adapter comprising:
- a housing of a configuration of a cassette normally used with said playback deck,
- a record head supported in a peripheral front wall of said housing in a position for contacting a playback head of said playback deck,
- electrical conducting means located partly within said housing and extending from said housing, the conducting means having one end electrically coupled to said record head for providing audio signals to said record head,
- connector means coupled to an other end of the said electrical conducting means, for receiving the audio signals for providing to the record head,
- a first opening in a peripheral side wall of said housing, for enabling the conducting means to extend from said adapter from the sidewall thereof, such that the adapter may be used with a playback deck of the side loading type,
- means being provided in a peripheral rear wall of said housing opposite said record head for enabling the conducting means to extend from said adapter from the rear wall thereof, such that the adapter may be used with a playback deck of the front-loading type, said means comprising a preformed second opening, the housing comprising two housing parts being assembled by means of releasable assembling means so as to enable a de-assembling of both housing parts. Such an adapter is known from JP-U 54023701.

### Background of the invention

The adapter described is in the form of a compact cassette. The first opening in the peripheral side wall and the means provided in the peripheral rear wall of the housing of the adapter are combined into one opening provided in the back corner of the cassette housing. The connecting means loosely extend through said corner opening so that insertion of the adapter in a playback device of the front-loading type or the side-loading type is possible, without an obstruction by the connecting means.

The known adapter has the disadvantage that the connecting means that loosely extend through the corner opening might break during continuous use of the adapter. Further, the corner opening enables dust to enter the adapter.

### Summary of the invention

The invention has for its object to offer an improved adapter. To this end, the adapter in accordance with the invention is characterized in that, the electrical conducting means are fixedly positioned in said first opening after final assembly of said adapter for consumer use so as to prevent repositioning the conducting means from the first opening to the second opening without de-assembling both housing parts, the means provided in said peripheral rear wall further comprising closure means for closing said second opening, the electrical conducting means being releasably positioned in said first opening in one of said housing parts after de-assembly of said housing parts so as to enable a repositioning of the conducting means from the first opening into the preformed second opening after removing the closure means, that the electrical conducting means are fixedly positioned in said second opening after the subsequent assembly of said adapter for use of said adapter with said playback deck of the front-loading type, so as to prevent repositioning the conducting means from the second opening to the first opening without de-assembling both housing parts. Fixedly positioning the connecting means in the first opening improves the mechanical construction of the connecting means so that the electrical conductors in the connecting means will not break that easily. Further, repositioning the connecting means is only possible when de-assembling both housing parts. This enables the user to realize the second opening in the rear peripheral wall by removing the closure means.

The reason for the connecting means to extend from the first opening in the side wall, is that present day playback decks, such as they are incorporated in carradios, are of the side-loading type. Therefore, no repositioning of the connecting means are needed, resulting in a cassette adapter which is substantially dust free. For the decreasing number of cassette playback decks of the front loading type that are still in the market, the cassette adapter enables the repositioning of the connecting means, so that it is possible to use the adapter in playback decks of the front-loading type as well.

The adapter may be further characterized in that, the closure means comprise break-away means for breaking away so as to obtain said preformed second opening.
More preferably, the closure means further comprise a releasable closure body, and that the releasable closure body and said first opening are shaped so as to position the closure body in said first opening for enabling the closure body to close said first opening when the conducting means are fixedly positioned in the preformed second opening after the subsequent assembly of said adapter.
This enables a substantially dust free adapter to be obtained, even after repositioning the connecting means.

In another embodiment, the adapter may be further characterized in that, the closure means are in the form of releasable closure means being accommodated in said preformed second opening.
The closure means can be in the form of a releasable plug inserted in the second opening. Repositioning the connecting means to the second opening, and repositioning the plug in the first opening results again in a substantially dust free adapter.

In again another embodiment of the invention, the adapter is provided with the first opening and the preformed second opening being located near the corner between said peripheral side and rear wall, and is characterized in that, the electrical conducting means are shaped such so as to form the closure means, and that the first and second openings are shaped such that, when the electrical conducting means is positioned in the first opening, it closes the second opening, and when the electrical conducting means is positioned in the second opening, it closes the first opening. In this case, no additional elements for closing the unused opening is needed.

It should be noted that US patent spec. no. 4,734,897 discloses an adapter having a first opening in the peripheral side wall and a second opening in the peripheral rear wall. The adapter is however not provided with closure means to close the unused opening. Further, the known adapter enables the repositioning of the connecting means from the opening in the sidewall to the opening in the rear wall via a slot interconnecting the two openings. Repositioning the connecting means via the slot however results in wear of the connecting means, so that in the end, the electrical connection will be cut.

It will be appreciated that, in those markets where playback decks of the front-loading type are commonly used, the electrical conducting means extend from the rear-wall of the adapter, after final assembly of the adapter for consumer use.

### Brief description of the drawings

These and further objects of the invention will be further described in relation to a number of embodiments of the adapter in the following figure description, wherein
figure 1 shows a perspective view of the adapter,
figure 2 various views on the adapter,
figure 3a a top view and figure 3b a side view of one of the housing parts of the adapter,
figure 4a a top view and figure 4b a side view of the other housing part,
figure 5 a top view of another embodiment of one of the housing parts, and
figure 6 a top view of again another embodiment of one of the housing parts.

### Description of the embodiments

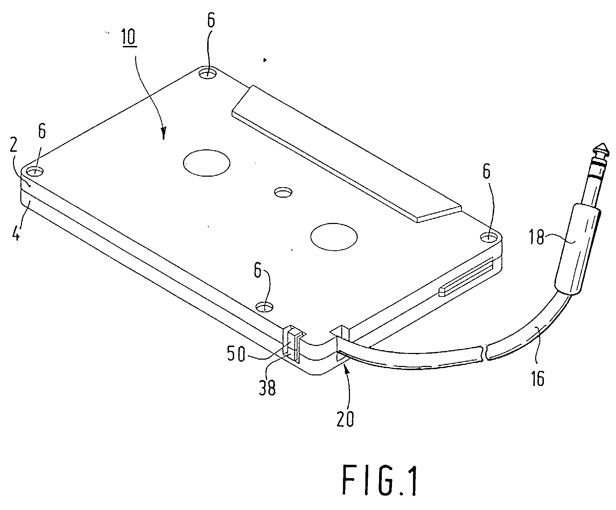

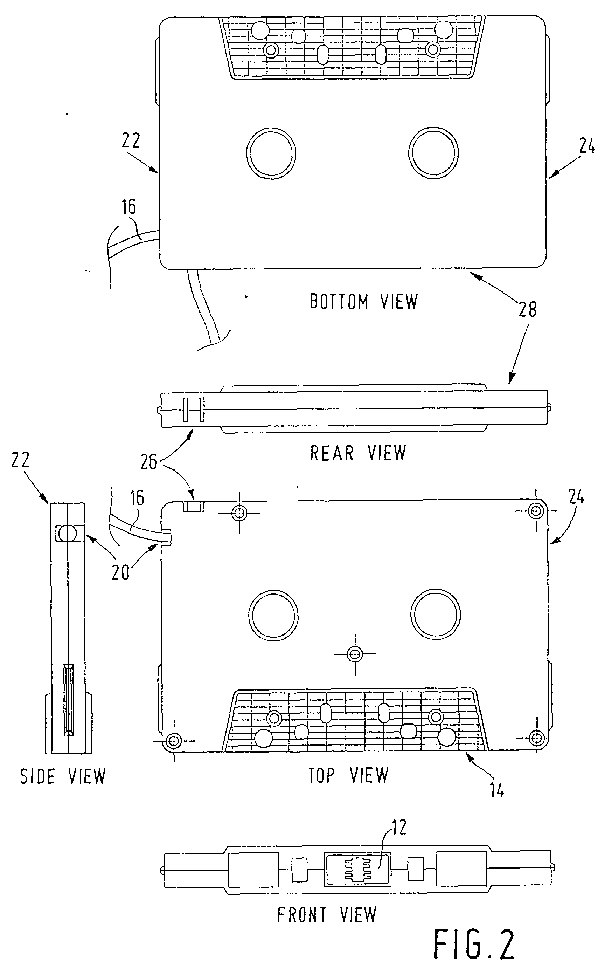

Figure 1 shows a perspective view, and figure 2 shows various side views of the adapter. The adapter is for enabling signals produced by a signal source (not shown), such as a CD player, to be reproduced as audio sounds by a cassette player audio system comprising a cassette audio playback deck of the front-loading type or the side -loading type. The adapter comprises a housing 10 of a configuration of a cassette normally used with said playback deck. The present embodiment is in the form of a standard compact cassette, but other types of cassettes are equally well possible, such as a 8-track cassette, or the more recently introduced DCC cassette. The adapter comprises two separate housing parts 2 and 4 screwed together by means of screws 6.

Figure 1 shows the adapter after final assembly of said adapter for consumer use.

A record head 12 (fig. 2) is supported in a peripheral front wall 14 of said housing 10 in a position for contacting a playback head of a playback deck. Electrical conducting means 16, in the form of a three lead electrical wire, is located partly within said housing and extends from said housing. The conducting means 16 have one end electrically coupled to said record head, which is in this case a stereo record head, for providing a stereo audio signal to said record head 12. A connector means 18, in the form of a headphone jack, is coupled to a other end of the said electrical conducting means 16, for receiving the audio signals from the audio source, such as the previously mentioned CD player. A first opening 20 is provided in a peripheral side wall 22 of said housing 10, via which the conducting means 16 extends from said adapter from the sidewall thereof. In this position of the connecting means 16, the adapter may be used with a playback deck of the side loading type. When positioning the adapter in such a playback device, the adapter is inserted with its other side wall 24 first into the playback device.

Means 26 are provided in a peripheral rear wall 28 of said housing for enabling the conducting means 16 to extend from said adapter from the rear wall thereof, such that the adapter may be used with a playback deck of the front-loading type. The means 26 are in the form of a preformed second opening.

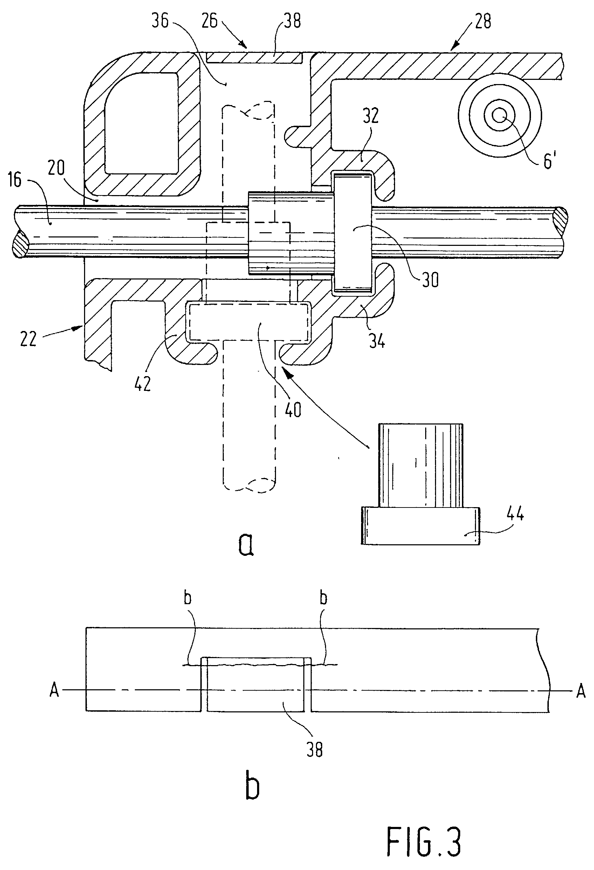

The means 26 in the peripheral rear wall 28 are shown in more detail in figure 3. Figure 3 shows two views on the housing part 4 of the adapter, when separated from the other housing part 2. Figure 3 shows in figure 3a a cross section along the line A-A in figure 3b.

The view in figure 3a shows the electrical connecting means 16 positioned in the first opening 20. The connecting means 16 are fixedly positioned in the opening 20 by means of a clamping unit 30. The clamping unit 30 is positioned in a space formed by the walls 32 and 34.

The means 26 in the rear wall 28 comprises a second opening 36 and closure means 38. The closure means 38 is in the form of a break-away piece largely covering the opening 36. The break-away piece 38 can be broken away along the line b-b in figure 3b. This enables the connecting means 16 to be repositioned from the position shown in solid lines into the position shown in broken lines. Now the clamping unit 30 is positioned in the space 40 formed by the walls 34 and 42. In this second position, the wire 16 extends from the rear wall 28 through the opening 36, as shown by broken lines as well in the bottom view of figure 2. The closure means can in addition comprise a plug 44, which in the original position of the wire 16, is positioned in the space 40. Upon repositioning the wire 16, the plug should be taken from the space 40, and can be positioned in the space 30. This results in a dust free closure of both openings 20 and 36.

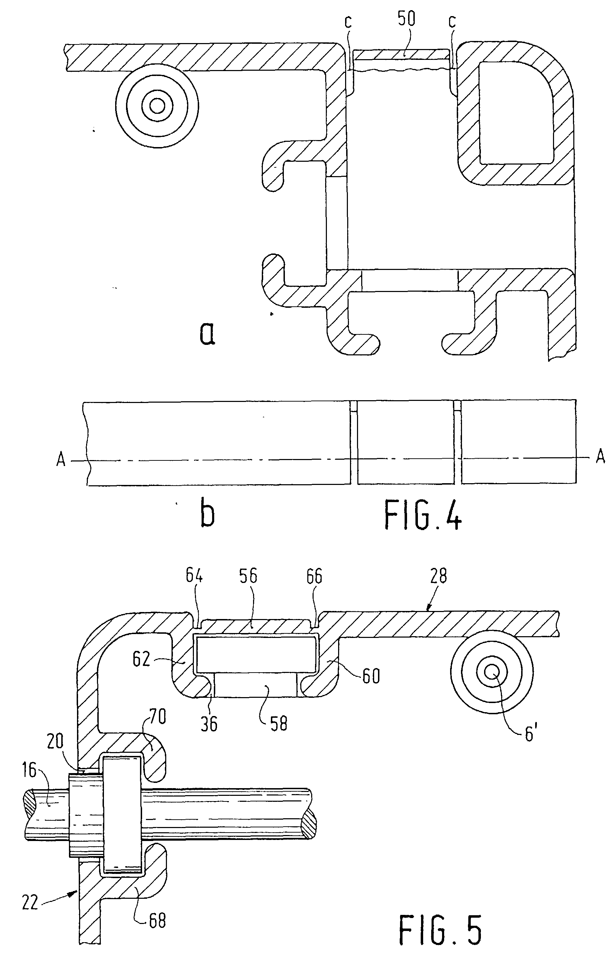

Figure 4a and 4b show the corresponding other housing part 2, provided with a break-away piece 50 that can be broken away along the line c-c, so as to realize (that part of) the second opening 36 (in the housing part 2). It should be noted that it is not necessary to provide both housing parts with a break-away piece. It could have been possible to provide the housing part 4 with a break-away piece only. The two housing parts 2 and 4 are screwed together by means of screws, as has been said earlier. The holes denoted 6' are the holes for those screws.

Figure 5 shows a different construction of the housing part 4. The electrical connecting means 16 are again positioned in the first opening 20, so that it extends from the sidewall 22 of the housing. The preformed opening 36 is closed by a break-away piece 56 and further a closure plug 58 is positioned in the space formed by the walls 60 and 62. The break-away piece 56 can be broken away along the thinner parts 64 and 66, so as to realize the second preformed opening. The plug 58 should be taken out to enable the positioning of the wire 16 in the second opening 36. The plug 58 can be positioned in the space formed by the walls 68 and 70, so as to close the opening 20.

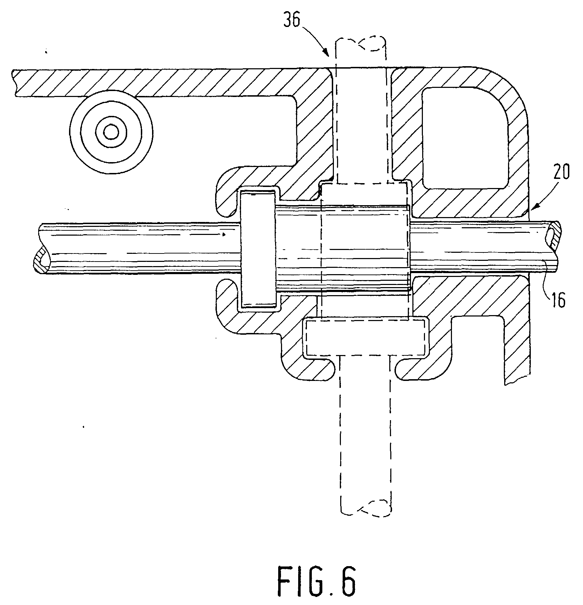

Figure 6 shows a construction where the electrical conductor 16 itself forms the closure means. Figure 6 shows on of the two cassette housings. The other can be mirror symmetric. The conductor 16, the first opening 20 and the second opening 36 are shaped such that, when the conductor 16 is positioned in the first opening 20, it closes the second opening 36, so that no dust can enter the cassette housing. In the same way, when the conductor 16 is positioned in the second opening 36, it closes the first opening 20, so that no dust can enter the cassette housing. To that purpose, the housing walls closely nestle against the conductor wall.

## Claims

1. An adapter for enabling signals produced by a signal source to be reproduced as audio sounds by a cassette player audio system comprising a cassette audio playback deck of the front-loading type or the side -loading type, wherein a cassette is normally positioned in use substantially completely within the confines of said cassette playback deck, said adapter comprising:
- a housing (10) of a configuration of a cassette normally used with said playback deck,
- a record head (12) supported in a peripheral front wall (14) of said housing in a position for contacting a playback head of said playback deck,
- electrical conducting means (16) located partly within said housing and extending from said housing, the conducting means having one end electrically coupled to said record head for providing audio signals to said record head,
- connector means (18) coupled to an other end of the said electrical conducting means, for receiving the audio signals for providing to the record head,
- a first opening (20) in a peripheral side wall of said housing, for enabling the conducting means to extend from said adapter from the sidewall thereof, such that the adapter may be used with a playback deck of the side loading type,
- means (26) being provided in a peripheral rear wall (28) of said housing opposite said record head for enabling the conducting means to extend from said adapter from the rear wall thereof, such that the adapter may be used with a playback deck of the front-loading type, said means comprising a preformed second opening (36), the housing comprising two housing parts (2,4) being assembled by means of releasable assembling means so as to enable a de-assembling of both housing parts,
characterized in that the electrical conducting means are fixedly positioned in said first opening after final assembly of said adapter for consumer use so as to prevent repositioning the conducting means from the first opening to the second opening without de-assembling both housing parts, the means provided in said peripheral rear wall further comprising closure means (38) for closing said second opening (36), the electrical conducting means being releasably positioned in said first opening (20) in one of said housing parts after de-assembly of said housing parts so as to enable a repositioning of the conducting means (16) from the first opening into the preformed second opening after (36) removing the closure means (38), that the electrical conducting means are fixedly positioned in said second opening (36) after the subsequent assembly of said adapter for use of said adapter with said playback deck of the front-loading type, so as to prevent repositioning the conducting means from the second opening to the first opening without de-assembling both housing parts.

2. Adapter as claimed in claim 1, characterized in that the closure means comprise break-away means (38) for breaking away so as to obtain said preformed second opening (36).

3. Adapter as claimed in claim 2, characterized in that the closure means further comprise a releasable closure body (58), and that the releasable closure body (58) and said first opening (20) are shaped so as to position the closure body in said first opening for enabling the closure body to close said first opening when the conducting means are fixedly positioned in the preformed second opening (36) after the subsequent assembly of said adapter.

4. Adapter as claimed in claim 1, characterized in that the closure means are in the form of releasable closure means (58) being accommodated in said preformed second opening (36).

5. Adapter as claimed in claim 1 or 4, characterized in that said closure means (58) and said first opening (20) are shaped so as to position the closure means in said first opening for enabling the closure means to close said first opening when the conducting means (16) are fixedly positioned in the preformed second opening (36) after the subsequent assembly of said adapter.

6. Adapter as claimed in claim 1, wherein the first opening and the preformed second opening are located near the corner between said peripheral side and rear wall, characterized in that the electrical conducting means are shaped such so as to form the closure means, and that the first and second openings are shaped such that, when the electrical conducting means is positioned in the first opening, it closes the second opening, and when the electrical conducting means is positioned in the second opening, it closes the first opening (fig.6).

7. Adapter as claimed in claim 6, characterized in that the closure means further comprise break-away means (56) for breaking away so as to obtain said preformed second opening.

8. An adapter for enabling signals produced by a signal source to be reproduced as audio sounds by a cassette player audio system comprising a cassette audio playback deck of the front-loading type or the side -loading type, wherein a cassette is normally positioned in use substantially completely within the confines of said cassette playback deck, said adapter comprising:
- a housing (10) of a configuration of a cassette normally used with said playback deck,
- a record head (12) supported in a peripheral front wall (14) of said housing in a position for contacting a playback head of said playback deck,
- electrical conducting means (16) located partly within said housing and extending from said housing, the conducting means having one end electrically coupled to said record head for providing audio signals to said record head,
- connector means (18) coupled to an other end of the said electrical conducting means, for receiving the audio signals for providing to the record head,
- a first opening (26) in a peripheral rear wall of said housing opposite said record head, for enabling the conducting means to extend from said adapter from the rear wall thereof, such that the adapter may be used with a playback deck of the front loading type,
- means (20) being provided in a peripheral side wall of said housing, for enabling the conducting means to extend from said adapter from the side wall thereof, such that the adapter may be used with a playback deck of the side-loading type, said means comprising a preformed second opening (20), the housing comprising two housing parts (2,4) being assembled by means of releasable assembling means so as to enable a de-assembling of both housing parts,
characterized in that the electrical conducting means (16) are fixedly positioned in said first opening (26) after final assembly of said adapter for consumer us so as to prevent repositioning the conducting means from the first opening to the second opening without de-assembling both housing parts, the means provided in said peripheral side wall further comprising closure means for closing said second opening (20), the electrical conducting means being releasably positioned in said first opening in one of said housing parts after de-assembly of said housing parts so as to enable a repositioning of the conducting means from the first opening (26) into the preformed second opening (20) after removing the closure means, that the electrical conducting means are fixedly positioned in said second opening after the subsequent assembly of said adapter for use of said adapter with said playback deck of the side-loading type, so as to prevent repositioning the conducting means from the second opening to the first opening without de-assembling both housing parts.

## Patentansprüche

1. Adapter zum Ermöglichen der Wiedergabe von Signalen aus einer Signalquelle als akustischen Geräuschen mit Hilfe eines Kassettenspieler-Audiosystems mit einem Kassetten-Audiowiedergabedeck mit Front- oder Querladung, in das eine Kassette zur Verwendung im Wesentlichen ganz innerhalb der Begrenzungen des Kassetten-Wiedergabedecks üblicherweise eingeführt wird, wobei der Adapter folgende Elemente enthält:
- ein Gehäuse (10) einer Konfiguration einer normalerweise mit dem Wiedergabedeck benutzten Kassette,
- einen Aufnahmekopf (12), der in einer peripheren Vorderwand (14) des Gehäuses in einer Lage zum Kontaktieren eines Wiedergabekopfes des Wiedergabedecks getragen wird,
- elektrische Verbindungsmittel (16), die sich teilweise im Gehäuse befinden und sich vom Gehäuse aus erstrecken, wobei eines ihrer Enden mit dem Aufnahmekopf zum Abgeben akustischer Signale zum Aufnahmekopf elektrisch gekoppelt ist,
- mit dem anderen Ende der elektrischen Verbindungsmittel gekoppelte Leitermittel (18) zum Empfangen der akustischen Signale zum Weiterleiten zum Aufnahmekopf,
- eine erste Öffnung (20) in einer peripheren Seitenwand des Gehäuses, die es ermöglicht, dass die Leitermittel sich derart vom Adapter aus der Seitenwand erstrecken, dass der Adapter mit einem Wiedergabedeck vom Querladungstyp verwendbar ist,
- in einer peripheren Rückwand (28) des Gehäuses und dem Aufnahmekopf gegenüber angebrachte Mittel (26), die es ermöglichen, dass die Leitermittel sich vom Adapter aus der Rückwand derart erstrecken, dass der Adapter mit einem Wiedergabedeck vom Frontladungstyp verwendbar ist, wobei die Mittel eine vorgeformte zweite Öffnung (36) aufweist, das Gehäuse aus zwei Gehäuseteilen (2, 4) besteht, die mit Hilfe löslicher Mittel aneinander befestigt werden können, um die Möglichkeit zum Lösen der beiden Gehäuseteile voneinander zu haben,
dadurch gekennzeichnet, daß bei Fertigstellung des Adapters zum Kundengebrauch die elektrischen Verbindungsmittel in der ersten Öffnung fest angebracht sind, damit Neupositionierung der Verbindungsmittel von der ersten nach der zweiten Öffnung ohne Auseinandernehmen der beiden Gehäuseteile verhindert wird, wobei die in der peripheren Rückwand angebrachten Mittel außerdem Abdichtmittel (38) zum Abschließen der zweiten Öffnung (36) enthalten, die elektrischen Verbindungsmittel in der ersten öffnung (20) in einem der Gehäuseteile nach dem Auseinandernehmen der Gehäuseteile löslich angebracht sind, damit die Verbindungsmittel (16) von der ersten Öffnung in die vorgeformte zweite Öffnung (36) nach Abnehmen des Abdichtmittels (38) neupositioniert werden können, dass die elektrische Verbindungsmittel nach der folgenden Zusammenstellung des Adapters zum Gebrauch des Adapters mit dem Wiedergabedeck vom Frontladungstyp in der zweiten Öffnung (36) fest angebracht sind, damit Neupositionierung der Verbindungsmittel von der zweiten Öffnung nach der ersten Öffnung ohne Auseinandernehmen beider Gehäuseteil verhindert wird.

2. Adapter nach Anspruch 1, dadurch gekennzeichnet, dass das Abdichtmittel Losbrechmittel (38) zur Bildung der vorgeformten zweiten Öffnung (36) nach dem Losbrechen enthält.

3. Adapter nach Anspruch 2, dadurch gekennzeichnet, dass das Abdichtmittel weiter noch einen löslichen Abdichtkörper (58) enthält, und der lösliche Abdichtkörper (58) und die erste Öffnung (20) so ausgebildet sind, dass der Abdichtkörper in die erste Öffnung passt und sie damit abschließt, wenn die Verbindungsmittel nach der folgenden Zusammenstellung des Adapters in der vorgeformten zweiten Öffnung (36) fest angebracht sind.

4. Adapter nach Anspruch 1, dadurch gekennzeichnet, dass das Abdichtmittel in Form löslicher Abdichtmittel (58) in der vorgeformten zweiten Öffnung (36) angeordnet ist.

5. Adapter nach Anspruch 1 oder 4, dadurch gekennzeichnet, dass das Abdichtmittel (58) und die erste Öffnung (20) derart ausgebildet sind, dass das Abdichtmittel in der ersten Öffnung derart angebracht wird, dass das Abdichtmittel die erste Öffnung abschließen kann, wenn die Verbindungsmittel (16) nach der folgenden Zusammenstellung des Adapters in der vorgeformten zweiten Öffnung (36) fixiert wird.

6. Adapter nach Anspruch 1, worin die erste Öffnung und die vorgeformte zweite Öffnung sich in der Nähe der Ecke zwischen der peripheren Seitenwand und der Rückwand befindet, dadurch gekennzeichnet, dass die elektrischen Verbindungsmittel derart ausgebildet sind, dass sie das Abdichtmittel bilden, und dass die ersten und zweiten Öffnungen derart geformt sind, dass bei Anbringen der elektrischen Verbindungsmittel in der ersten Öffnung die zweite Öffnung abgeschlossen ist, und bei Anbringen der elektrischen Verbindungsmittel in der zweiten Öffnung die erste Öffnung abgeschlossen ist (Fig. 6).

7. Adapter nach Anspruch 6, dadurch gekennzeichnet, daß das Abdichtmittel außerdem Losbrechmittel (56) zum Bilden der vorgeformten zweiten Öffnung nach dem Losbrechen enthält.

8. Adapter zum Ermöglichen der Wiedergabe von Signalen aus einer Signalquelle als akustischen Geräuschen mit Hilfe eines Kassettenspieler-Audiosystems mit einem Kassetten-Audiowiedergabedeck mit Front- oder Querladung, in das eine Kassette zur Verwendung im Wesentlichen ganz innerhalb der Begrenzungen des Kassetten-Wiedergabedecks üblicherweise eingeführt wird, wobei der Adapter folgende Elemente enthält:
- ein Gehäuse (10) einer Konfiguration einer normalerweise mit dem Wiedergabedeck benutzten Kassette,
- einen Aufnahmekopf (12), der in einer peripheren Vorderwand (14) des Gehäuses in einer Lage zum Kontaktieren eines Wiedergabekopfes des Wiedergabedecks getragen wird,
- elektrische Verbindungsmittel (16), die sich teilweise im Gehäuse befinden und sich vom Gehäuse aus erstrecken, wobei eines ihrer Enden mit dem Aufnahmekopf zum Abgeben akustischer Signale zum Aufnahmekopf elektrisch gekoppelt ist,
- mit dem anderen Ende der elektrischen Verbindungsmittel gekoppelte Leitermittel (18) zum Empfangen der akustischen Signale zum Weiterleiten zum Aufnahmekopf,
- eine erste Öffnung (26) in einer peripheren Seitenwand des Gehäuses, die es ermöglicht, dass die Leitermittel sich derart vom Adapter aus der Seitenwand erstrecken, dass der Adapter mit einem Wiedergabedeck mit Querladung verwendbar ist,
- in einer peripheren Rückwand (28) des Gehäuses und dem Aufnahmekopf gegenüber angebrachte Mittel (20), die es ermöglichen, dass die Verbindungsmittel sich vom Adapter aus der Rückwand derart erstrecken, dass der Adapter mit einem Wiedergabedeck mit Frontladung verwendbar ist, wobei die Mittel eine vorgeformte zweite Öffnung (20) aufweist, das Gehäuse aus zwei Gehäuseteilen (2, 4) besteht, die mit Hilfe löslicher Mittel aneinander befestigt werden können, um die Möglichkeit zum Lösen der beiden Gehäuseteile voneinander zu haben,
dadurch gekennzeichnet, daß bei Fertigstellung des Adapters zum Kundengebrauch die elektrischen Verbindungsmittel 16) in der ersten Öffnung (26) fest angebracht sind, damit Neupositionierung der Verbindungsmittel von der ersten nach der zweiten Öffnung ohne Auseinandernehmen der beiden Gehäuseteile verhindert wird, wobei die in der peripheren Rückwand angebrachten Mittel außerdem Abdichtmittel zum Abschließen der zweiten Öffnung (20) enthalten, die elektrischen Verbindungsmittel in der ersten öffnung in einem der Gehäuseteile nach dem Auseinandernehmen der Gehäuseteile löslich angebracht sind, damit die Verbindungsmittel von der ersten Öffnung (26) in die vorgeformte zweite Öffnung (20) nach Abnehmen des Abdichtmittels (38) neupositioniert werden können, dass die elektrische Verbindungsmittel nach der folgenden Zusammenstellung des Adapters zum Gebrauch des Adapters mit dem Wiedergabedeck mit Querladung in der zweiten Öffnung fest angebracht sind, damit Neupositionierung der Verbindungsmittel von der zweiten Öffnung nach der ersten Öffnung ohne Auseinandernehmen beider Gehäuseteile verhindert wird.

## Revendications

1. Adaptateur destiné à permettre la reproduction de signaux produits par une source de signaux sous la forme de sons audio par un système audio de lecteur de cassette comprenant une platine de lecture audio de cassette du type à chargement frontal ou du type à chargement latéral, dans laquelle une cassette est normalement placée, en fonctionnement, pratiquement entièrement dans les confins de ladite platine de lecture de cassette, ledit adaptateur comprenant :
un boîtier (10) ayant la configuration d'une cassette normalement utilisée avec ladite platine de lecture,
une tête d'enregistrement (12) supportée dans une paroi avant périphérique (14) dudit boîtier dans une position permettant d'établir un contact avec une tête de lecture de ladite platine de lecture,
un moyen conducteur de l'électricité (16) situé en partie dans ledit boîtier et sortant de celui-ci, une extrémité du moyen conducteur étant couplée électriquement à ladite tête d'enregistrement afin de fournir des signaux audio à ladite tête d'enregistrement,
un connecteur (18) couplé à une autre extrémité dudit moyen conducteur de l'électricité, pour recevoir les signaux audio à fournir à la tête d'enregistrement,
une première ouverture (20) dans une paroi latérale périphérique dudit boîtier, pour permettre au moyen conducteur de sortir dudit adaptateur à travers sa paroi latérale, de telle sorte que l'adaptateur puisse être utilisé avec une platine de lecture du type à chargement latéral,
des moyens (26) étant prévus dans une paroi arrière périphérique (28) dudit boîtier face à ladite tête d'enregistrement afin de permettre au moyen conducteur de sortir dudit adaptateur à travers sa paroi arrière, de telle sorte que l'adaptateur puisse être utilisé avec une platine de lecture du type à chargement frontal, lesdits moyens comprenant une deuxième ouverture préformée (36), le boîtier comprenant deux parties de boîtier (2, 4) assemblées par des moyens d'assemblage séparables de manière à permettre un désassemblage des deux parties de boîtier,
caractérisé en ce que le moyen conducteur de l'électricité est maintenu fixement en place dans ladite première ouverture après l'assemblage final dudit adaptateur destiné à une utilisation grand public de manière à empêcher le changement de place du moyen conducteur de la première ouverture dans la deuxième ouverture sans désassembler les deux parties de boîtier, les moyens prévus dans ladite paroi arrière périphérique comprenant en outre un moyen de fermeture (38) pour fermer ladite deuxième ouverture (36), le moyen conducteur de l'électricité étant maintenu en place de manière amovible dans ladite première ouverture (20) dans une desdites parties de boîtier après désassemblage desdites parties de boîtier de manière à permettre un changement de place du moyen conducteur (16) de la première ouverture dans la deuxième ouverture préformée après l'enlèvement (36) du moyen de fermeture (38), et en ce que le moyen conducteur de l'électricité est maintenu fixement en place dans ladite deuxième ouverture (36) après l'assemblage suivant dudit adaptateur en vue de l'utilisation dudit adaptateur avec ladite platine de lecture du type à chargement frontal, de manière à empêcher le changement de place du moyen conducteur de la deuxième ouverture dans la première ouverture sans désassembler les deux parties de boîtier.

2. Adaptateur suivant la revendication 1, caractérisé en ce que le moyen de fermeture comprend un moyen brisable (38) à rompre pour obtenir ladite deuxième ouverture préformée (36).

3. Adaptateur suivant la revendication 2, caractérisé en ce que le moyen de fermeture comprend en outre un corps de fermeture amovible (58), et en ce que le corps de fermeture amovible (58) et ladite première ouverture (20) sont façonnés de manière à maintenir le corps de fermeture en place dans ladite première ouverture afin de permettre au corps de fermeture de fermer ladite première ouverture lorsque le moyen conducteur est maintenu en place dans la deuxième ouverture préformée (36) après l'assemblage suivant dudit adaptateur.

4. Adaptateur suivant la revendication 1, caractérisé en ce que le moyen de fermeture se présente sous la forme d'un moyen de fermeture amovible (58) logé dans ladite deuxième ouverture préformée (36).

5. Adaptateur suivant la revendication 1 ou 4, caractérisé en ce que ledit moyen de fermeture (58) et ladite première ouverture (20) sont façonnés de manière à placer le moyen de fermeture dans ladite première ouverture afin de permettre au moyen de fermeture de fermer ladite première ouverture lorsque le moyen conducteur (16) est maintenu fixement en place dans la deuxième ouverture préformée (36) après l'assemblage suivant dudit adaptateur.

6. Adaptateur suivant la revendication 1, dans lequel la première ouverture et la deuxième ouverture préformée sont situées près du coin entre lesdites parois latérale et arrière périphériques, caractérisé en ce que le moyen conducteur de l'électricité est façonnés de manière à constituer le moyen de fermeture, et en ce que les première et deuxième ouvertures sont façonnées de telle sorte que, lorsque le moyen conducteur de l'électricité est maintenu en place dans la première ouverture, il ferme la deuxième ouverture, et lorsque le moyen conducteur de l'électricité est maintenu en place dans la deuxième ouverture, il ferme la première ouverture (Fig. 6).

7. Adaptateur suivant la revendication 6, caractérisé en ce que le moyen de fermeture comprend en outre des moyens brisables (56) à rompre pour obtenir ladite deuxième ouverture préformée.

8. Adaptateur destiné à permettre la reproduction de signaux produits par une source de signaux sous la forme de sons audio par un système audio de lecteur de cassette comprenant une platine de lecture audio de cassette du type à chargement frontal ou du type à chargement latéral, dans laquelle une cassette est normalement placée en fonctionnement pratiquement entièrement dans les confins de ladite platine de lecture de cassette, ledit adaptateur comprenant :
- un boîtier (10) ayant la configuration d'une cassette normalement utilisée avec ladite platine de lecture,
- une tête d'enregistrement (12) supportée dans une paroi avant périphérique (14) dudit boîtier dans une position permettant d'établir un contact avec une tête de lecture de ladite platine de lecture,
- un moyen conducteur de l'électricité (16) situé en partie dans ledit boîtier et sortant de celui-ci, une extrémité du moyen conducteur étant couplée électriquement à ladite tête d'enregistrement pour délivrer des signaux audio à ladite tête d'enregistrement,
- un connecteur (18) couplé à une autre extrémité dudit moyen conducteur de l'électricité, pour recevoir les signaux audio à fournir à la tête d'enregistrement,
- une première ouverture (26) dans une paroi arrière périphérique dudit boîtier en face de ladite tête d'enregistrement, pour permettre au moyen conducteur de sortir dudit adaptateur à travers sa paroi arrière, de telle sorte que l'adaptateur puisse être utilisé avec une platine de lecture du type à chargement frontal,
- des moyens (20) étant prévus dans une paroi latérale périphérique (28) dudit boîtier, pour permettre au moyen conducteur de sortir dudit adaptateur à travers sa paroi latérale, de telle sorte que l'adaptateur puisse être utilisé avec une platine de lecture du type à chargement latéral, lesdits moyens comprenant une deuxième ouverture préformée (20), le boîtier comprenant deux parties de boîtier (2, 4) assemblées par des moyens d'assemblage séparables de manière à permettre un désassemblage des deux parties de boîtier,
caractérisé en ce que le moyen conducteur de l'électricité (16) est maintenu fixement en place dans ladite première ouverture (26) après l'assemblage final dudit adaptateur destiné à une utilisation grand public de manière à empêcher le changement de place du moyen conducteur de la première ouverture dans la deuxième ouverture sans désassembler les deux parties de boîtier, les moyens prévus dans ladite paroi latérale périphérique comprenant en outre un moyen de fermeture pour fermer ladite deuxième ouverture (20), le moyen conducteur de l'électricité étant maintenu en place de manière amovible dans ladite première ouverture dans une desdites parties de boîtier après désassemblage desdites parties de boîtier de manière à permettre un changement de place du moyen conducteur de la première ouverture (26) dans la deuxième ouverture préformée (20) après l'enlèvement des moyens de fermeture, et en ce que le moyen conducteur de l'électricité est maintenu fixement en place dans ladite deuxième ouverture (36) après l'assemblage suivant dudit adaptateur en vue d'utiliser ledit adaptateur avec ladite platine de lecture du type à chargement latéral, de manière à empêcher le changement de place des moyens conducteurs de la deuxième ouverture dans la première ouverture sans désassembler les deux parties de boîtier.
